# EUROPÄISCHE PATENTANMELDUNG

(11) **EP 3 511 742 A2**
(43) Veröffentlichungstag der Anmeldung: **17.07.2019**
(21) Anmeldenummer: 18208220.6
(22) Anmeldetag: 26.11.2018
(51) Int. Cl.: G01S 19/34, G01S 19/24

(54) **MARKIERUNGSVORRICHTUNG MIT ENERGIESPARENDEM EMPFANG VON SATELLITENDATEN**

(30) Priorität: 10.01.2018 DE 102018200259
(71) Anmelder: Robert Bosch GmbH, 70442 Stuttgart (DE)
(72) Erfinder: Brenk, Achim, 75236 Kaempfelbach (DE); Heigl, Michael, 70825 Korntal-Muenchingen (DE)

(57) **Zusammenfassung**

Markierungsvorrichtung (1) für ein Objekt (2), umfassend einen Empfänger (11) zum Erfassen von Signalen (32a-32d) eines satellitengestützten Navigationssystems (3) und eine Auswerteeinheit (12), die dazu ausgebildet ist, die erfassten Signale zu einem Datensatz (13) weiterzuverarbeiten, aus dem die Position (1a) der Markierungsvorrichtung ermittelbar ist, wobei die Markierungsvorrichtung weiterhin einen Speicher (17) für Ephemeridendaten (33a-33d) von Satelliten (31a-31d) des Navigationssystems enthält, wobei eine Torschaltung (18) vorgesehen ist, die dazu ausgebildet ist, aus den im Speicher hinterlegten Ephemeridendaten einen Zeitraum (34a, 34b) zu ermitteln, in dem seitens des Navigationssystems die Übermittlung einer für die Markierungsvorrichtung relevanten Information (35, 33a-33d) in den Signalen geplant ist, und den Empfänger selektiv während dieses Zeitraums zu aktivieren.

## Beschreibung

Die vorliegende Erfindung betrifft Markierungsvorrichtungen, die mit Objekten koppelbar sind, um diese auffindbar zu machen.

### Stand der Technik

Auf Baustellen ist es auf Grund beengter Platzverhältnisse nicht immer möglich, jedem Gegenstand einen festen Lagerplatz zuzuweisen. Bei häufig verwendeten Gegenständen, und insbesondere bei Verbrauchsmaterialien, ist eine kontinuierliche Buchführung, was sich wo befindet, nicht praktikabel. Im Ergebnis wird auf Baustellen sehr viel Arbeitszeit damit verbracht, Gegenstände und Materialien zu suchen.

Die DE 10 2016 203 076 A1 offenbart eine Markierungsvorrichtung, die mit einem zu lokalisierenden Objekt koppelbar ist und in der Lage ist, ihre Position innerhalb der Baustelle durch Auswertung der Funksignale von terrestrischen Bakensendern zu bestimmen.

Die WO 2017/021 050 A1 offenbart ein Lokalisierungssystem für Parkhäuser, bei dem Fahrzeuge ihre Positionen über ein satellitengestütztes Navigationssystem bestimmen und die Positionsdaten drahtlos untereinander austauschen.

### Offenbarung der Erfindung

Im Rahmen der Erfindung wurde eine Markierungsvorrichtung für ein Objekt entwickelt. Diese Markierungsvorrichtung umfasst einen Empfänger zum Erfassen von Signalen eines satellitengestützten Navigationssystems und eine Auswerteeinheit. Diese Auswerteeinheit ist dazu ausgebildet, die erfassten Signale zu einem Datensatz weiterzuverarbeiten, aus dem die Position der Markierungsvorrichtung ermittelbar ist. Der Datensatz kann beispielsweise die Position der Markierungsvorrichtung direkt enthalten, aber auch ein Vorprodukt hierfür, wie etwa eine Pseudostrecke zu einem Satelliten.

Zur Unterstützung der Erfassung ist weiterhin ein Speicher für Ephemeridendaten von Satelliten des Navigationssystems vorgesehen.

Es ist zusätzlich eine Torschaltung vorgesehen, die dazu ausgebildet ist, aus den im Speicher hinterlegten Ephemeridendaten einen Zeitraum zu ermitteln, in dem seitens des Navigationssystems die Übermittlung einer für die Markierungsvorrichtung relevanten Information in den Signalen geplant ist, und den Empfänger selektiv während dieses Zeitraums zu aktivieren.

Es wurde erkannt, dass der Empfänger für die Signale von den Satelliten ein wesentlicher Stromverbraucher der Markierungsvorrichtung ist und dass zugleich unterschiedliche Komponenten der Signale unterschiedlich häufig benötigt werden. Zugleich haben die Signale eine periodisch wiederkehrende Struktur, so dass bei Kenntnis der Ephemeridendaten bekannt ist, wann genau welche Art von Information übertragen wird. Indem der Empfänger selektiv exakt dann aktiviert wird, wenn die benötigte Information über das Satellitensignal übertragen wird, kann ein erheblicher Teil der bei kontinuierlichem Empfang des Signals benötigten Energie eingespart werden.

Insbesondere bei Markierungsvorrichtungen für den Einsatz auf Baustellen wird häufig angestrebt, dass sie zum Einen möglichst aus einer Lebensdauerbatterie versorgt werden können und dass sie zum Anderen ihre Datensätze über allgemein zugeteilte Funkfrequenzen, die nur sporadisches Senden erlauben, an ein Lokalisierungssystem für das Objekt übermitteln können. Dies bedingt, dass die Markierungsvorrichtung allenfalls im Abstand von einigen Minuten einen Datensatz ermitteln muss, aus dem auf die eigene Position zurückgeschlossen werden kann. Die Torschaltung ermöglicht es nun, anhand der vorhandenen Ephemeridendaten den Zeitpunkt, zu dem ein erneuter Bedarf für die Ermittlung eines neuen Datensatzes besteht, sowie den Zeitpunkt, zu dem die dafür nötige Information über das Satellitensignal übertragen wird, genau vorauszuplanen. Dadurch kann der Anteil der Zeit, während dessen der Empfänger aktiv ist, deutlich reduziert werden.

So besteht etwa ein Signal eines GPS-Satelliten aus einer stetigen Abfolge von Subframes von je 6 Sekunden Dauer. Jeder Subframe beginnt mit einem Telemetrie-Wort von 0,6 Sekunden Dauer, gefolgt von einem Übergabe-Wort von weiteren 0,6 Sekunden Dauer und einem Datenblock von 4,8 Sekunden Dauer, der Korrekturdaten für die Systemzeit, Ephemeridendaten, Almanachdaten und Konfigurationsdaten enthält. Für eine Bestimmung der Signallaufzeit vom Satelliten zum Empfänger ist nur das Übergabe-Wort notwendig. Es genügt also, wenn der Empfänger für die 0,6 Sekunden, in denen das Übergabe-Wort übermittelt wird, aktiv ist.

Allgemein ist vorteilhaft die Torschaltung dazu ausgebildet, einen Zeitraum zu ermitteln, in dem die Übermittlung einer für eine Laufzeitmessung des Signals mindestens eines Satelliten notwendigen Information geplant ist. Die Signale anderer Navigationssysteme als GPS sind zwar anders aufgebaut, doch haben diese Navigationssysteme mit GPS gemeinsam, dass es einen periodisch wiederkehrenden Plan gibt, wann welche Art von Information übermittelt wird.

Wenn nun für die Positionsbestimmung ausschließlich Informationen empfangen werden, aus denen Signallaufzeiten hervorgehen, so werden die Ephemeridendaten in dem Speicher nicht mehr aktualisiert. Die Vorausplanung des Empfangs hängt aber davon ab, dass aktuelle Ephemeridendaten zur Verfügung stehen. Daher ist vorteilhaft die Torschaltung dazu ausgebildet, einen Zeitraum zu ermitteln, in dem die Übermittlung von Ephemeridendaten geplant ist. Der Empfänger kann dann selektiv aktiviert werden, wenn gerade die gewünschten Ephemeridendaten übertragen werden.

Dabei kann die Zeitspanne zwischen zwei Aktualisierungen der Ephemeridendaten deutlich länger gewählt werden als die Zeitspanne zwischen zwei Laufzeitmessungen. Beispielsweise können die Ephemeridendaten alle 30 Minuten aktualisiert werden. Innerhalb dieses Zeitraums können die Zeitfenster, in denen der Empfänger für Laufzeitmessungen zu aktivieren ist, hinreichend genau vorausgeplant werden.

Die Torschaltung ermöglicht also vorteilhaft eine Entkopplung der Laufzeitmessungen einerseits von der Aktualisierung der Ephemeridendaten andererseits. Nach dem bisherigen Stand der Technik wurden immer dann, wenn Laufzeiten gemessen wurden, im Anschluss auch Ephemeridendaten empfangen.

Beim durch die Torschaltung gesteuerten Empfang der Ephemeridendaten können beispielsweise bei GPS mehr als 40 % der Empfangszeit eingespart werden. Eine GPS-Navigationsnachricht (Frame) von 30 Sekunden Dauer ist in 5 Subframes zu je 6 Sekunden Dauer unterteilt. Nur die ersten drei Subframes enthalten Ephemeridendaten. Die übrigen Subframes enthalten neben Status- und Konfigurationsdaten insbesondere Almanachdaten. Die Almanachdaten sind für das schnelle Auffinden derzeit nicht sichtbarer Satelliten wichtig, haben aber eine Gültigkeitsdauer von 7 bis 14 Tagen und müssen dementsprechend wesentlich seltener aktualisiert werden als die Ephemeridendaten.

In einer weiteren vorteilhaften Ausgestaltung ist zusätzlich ein Verstärkungsregler vorgesehen, der dazu ausgebildet ist, aus den im Speicher hinterlegten Ephemeridendaten eine für den Empfang der Signale erforderliche Verstärkung des Empfängers zu ermitteln und den Empfänger mit dieser Verstärkung anzusteuern. Die genaue Position des Satelliten entlang seiner Bahn bestimmt nicht nur die Entfernung zum Empfänger, sondern auch weitere Größen, die für die empfangene Signalstärke relevant sind. Vom Winkel, in dem der Satellit über dem Horizont steht, hängt beispielsweise ab, wie stark sein Signal auf dem Weg zum Empfänger durch die Ionosphäre oder auch durch Abschattungseffekte terrestrischer Objekte beeinflusst wird. Dementsprechend ändert sich auch die Verstärkung, die im Empfänger jeweils notwendig ist, um das Signal in eine auswertbare Form zu überführen. Die Verstärkung kann nun jeweils so bemessen sein, dass das Signal gerade noch sicher auswertbar ist.

Vorteilhaft ist die Torschaltung, und/oder die Verstärkungsregelung, zusätzlich dazu ausgebildet, den von der Auswerteeinheit gelieferten Datensatz, und/oder eine von der Markierungsvorrichtung selbst ermittelte eigene Position, für die Ermittlung des Zeitraums für die Aktivierung des Empfängers, bzw. für die Ermittlung der Verstärkung, heranzuziehen. Auf diese Weise kann die Genauigkeit, mit der der Zeitraum, bzw. die Verstärkung, bestimmt werden kann, noch weiter gesteigert werden.

Die Markierungsvorrichtung kann beispielsweise rein passiv arbeiten und die von der Auswerteeinheit ermittelten Datensätze, bzw. die hieraus gefolgerten eigenen Positionen, in einem Speicher aufzeichnen, um den Weg der Markierungsvorrichtung im Nachhinein nachzuvollziehen. Besonders vorteilhaft ist jedoch eine Funkschnittstelle zur Übermittlung des Datensatzes an ein Lokalisierungssystem für das Objekt vorgesehen. Auf diese Weise kann das Objekt, beispielsweise auf einer Baustelle, wiedergefunden und ein Zeitaufwand für die Suche eingespart werden.

In einer weiteren besonders vorteilhaften Ausgestaltung ist ein Beschleunigungssensor vorgesehen. Auf diese Weise kann auch dann, wenn der Empfänger nur in großen Zeitintervallen Laufzeiten misst oder gar vollkommen ausgeschaltet ist, dennoch sofort registriert werden, dass das mit der Markierungsvorrichtung verbundene Objekt bewegt wird. Die Intervalle zwischen zwei Laufzeitmessungen können dann wieder verkürzt werden, bzw. die Laufzeitmessungen können überhaupt wieder aufgenommen werden.

Die Erfindung bezieht sich auch auf ein Verfahren zum Betreiben der Markierungsvorrichtung. Bei diesem Verfahren wird die Aktivierung des Empfängers für eine vorgegebene Ruhepause unterbunden und nach Ablauf dieser Ruhepause durch die Torschaltung gesteuert. Es wird also beispielsweise vorausgeplant, dass die nächste Gelegenheit nach Ablauf der Ruhepause, zu der die jeweils gewünschte Information in dem Satellitensignal übertragen wird, zu deren Empfang genutzt wird.

In einer besonders vorteilhaften Ausgestaltung wird zur Ermittlung der Ruhepause die Erhöhung des mittleren Energiebedarfs der Markierungsvorrichtung aufgrund der Verkürzung der Ruhepause gegenüber der Erhöhung des mittleren Energiebedarfs aufgrund der notwendigen Verlängerung des Zeitraums für die Aktivierung des Empfängers abgewogen.

Insbesondere bei der Festlegung der Ruhepause für die Aktualisierung der Ephemeridendaten gibt es ein diesbezügliches Optimum. Die Ephemeridendaten haben ein deutlich größeres Volumen als diejenigen Informationen, die für die Laufzeitmessung notwendig sind. Dementsprechend kostet jede Aktualisierung vergleichsweise viel Energie. Auf der anderen Seite bestimmt die Aktualität der Ephemeridendaten maßgeblich darüber, wie genau das Zeitfenster für den Empfang der Informationen für die Laufzeitmessung eingegrenzt werden kann. Eine Unsicherheit bezüglich des genauen Beginns macht es erforderlich, das Zeitfenster entsprechend zu verlängern, damit die Übertragung der Informationen nicht vorzeitig abgebrochen wird. Eine solche Verlängerung wiederum fällt bei den Informationen für die Laufzeitmessung, die etwa bei GPS in 0,6 Sekunden übertragen werden, deutlich mehr ins Gewicht als bei den Ephemeridendaten, die etwa bei GPS in 4,8 Sekunden übertragen werden.

In einer weiteren besonders vorteilhaften Ausgestaltung wird die Ruhepause auf die Dauer eines voraussichtlichen Nichtgebrauchs der Markierungsvorrichtung, und/oder eines damit verbundenen Objekts, festgelegt, wenn die für zwischenzeitlich entfallene Aktivierungen des Empfängers eingesparte Energiemenge größer ist als die für einen Kaltstart des Empfängers ohne gültige Ephemeridendaten benötigte Energiemenge.

Auf den meisten Baustellen herrscht nur zwischen 8 und 10 Stunden am Tag Betrieb. Für den Rest der Zeit ist kein Zugriff auf die Objekte, und somit auch keine ständig aktualisierte Positionsbestimmung, erforderlich. Der Kaltstart des Empfängers aus einer Situation heraus, in der keine gültigen Ephemeridendaten vorhanden sind, dauert beispielsweise bei GPS mehrere Minuten und kostet dementsprechend viel Energie. Daher lohnt es sich beispielsweise bei einer Mittagspause von einer Stunde nicht unbedingt, zwei aufeinanderfolgende Aktualisierungen der Ephemeridendaten einzusparen und diese somit verfallen zu lassen. Hingegen kann es sich energetisch durchaus lohnen, am Ende eines Arbeitstages die Aktualisierung der Ephemeridendaten einzustellen und am nächsten Morgen einen Kaltstart durchzuführen.

In einer weiteren besonders vorteilhaften Ausgestaltung wird ein Zeitpunkt, zu dem seit der letzten festgestellten Bewegung der Markierungsvorrichtung ein vorgegebener Zeitraum verstrichen ist, als Beginn der Ruhepause gewertet. Der Zeitpunkt, zu dem die nächste Bewegung der Markierungsvorrichtung festgestellt wird, wird als Ende der Ruhepause gewertet.

Es wurde erkannt, dass insbesondere auf einer Baustelle verschiedene Objekte, die mit Markierungsvorrichtungen gekoppelt sind, in unterschiedlichen Bauphasen unterschiedlich häufig gehandhabt werden. So kann beispielsweise eine Maschine oder ein Werkzeug während der ganzen Bauzeit auf der Baustelle vorhanden, aber nur in bestimmten Bauphasen in Betrieb sein. Auch können beispielsweise Vorräte von Bauteilen und/oder Materialien angelegt werden, die erst zu einem bestimmten Zeitpunkt benötigt werden, dann aber sofort verfügbar sein müssen. Beispielsweise erfordert der Versand bestimmter Großteile als Schwertransport einen Vorlauf für behördliche Genehmigungen, so dass diese Teile nicht ,just-in-time" entsprechend dem Baufortschritt angeliefert werden können.

Gerade diejenigen Gegenstände und Materialien aber, die nicht ständig gehandhabt werden, sind diejenigen, deren genaue Position nach einiger Zeit in Vergessenheit gerät. Wenn sie dann wieder benötigt werden, ist die letzte Nutzung möglicherweise schon so lange her, dass man mit der üblichen Methode des Wiederfindens durch Nachdenken, wann man das Objekt zuletzt gehandhabt hat, nicht weiterkommt.

Wenn nun die letzte bekannte Position des Objekts in einer Datenbank abgespeichert ist und die Markierungsvorrichtung zugleich einer Überwachung ermöglicht, ob das Objekt bewegt wird, dann kann ohne Verlust an Information nach einer bestimmten Zeit der Nichtbewegung die Aktivierung des Empfängers komplett unterbunden und die Markierungsvorrichtung so in einen besonders energiesparenden Modus versetzt werden. Dadurch wird die Wahrscheinlichkeit erhöht, dass, wenn das Objekt zum nächsten Mal bewegt wird, die Markierungsvorrichtung noch Batteriekapazität hat und die Bewegung registrieren kann.

Ebenso kann vorteilhaft ein Zeitraum, in dem die Markierungsvorrichtung bewegt wird, als Ruhepause für den Empfänger gewertet werden. Während das mit der Markierungsvorrichtung verbundene Objekt aktiv gehandhabt wird, ist seine Position dem Handhabenden bekannt, so dass es nicht zwingend notwendig ist, diese Position satellitengestützt zu messen. Erst wenn diese Handhabung beendet ist, steigt das Risiko, dass die Position des Objekts vergessen wird, deutlich an.

Die Informationen für eine Laufzeitmessung, und/oder die Ephemeridendaten, können somit bevorzugt in denjenigen Zeiträumen empfangen werden, in denen die Wahrscheinlichkeit erhöht ist, tatsächlich auf die durch ein Lokalisierungssystem erfasste Position der Markierungsvorrichtung zurückgreifen zu müssen. Somit wird die endliche Ressource der Batteriekapazität in der Markierungsvorrichtung zielgerichtet ausgenutzt.

Die Überwachung, ob die Markierungsvorrichtung bewegt wird, kann beispielsweise mit einem Beschleunigungssensor erfolgen. Der Beschleunigungssensor kann insbesondere von einem Typ sein, der in Ruhe keinen Strom verbraucht.

Da in Markierungsvorrichtungen vielfach universelle Embedded-Computer zum Einsatz kommen, kann die von der Erfindung bereitgestellte zusätzliche Funktionalität ganz oder teilweise in einer Software verkörpert sein, mit der eine bestehende Markierungsvorrichtung zu einer Markierungsvorrichtung gemäß der Erfindung aufgewertet werden kann. Ebenso kann beispielsweise ein Lokalisierungssystem durch eine Software, in der das Verfahren zum Betreiben der Markierungsvorrichtung verkörpert ist, mit der Funktionalität gemäß der Erfindung ausgerüstet werden. Diese Software ist insofern ein eigenständig vermarktbares Produkt. Die Erfindung bezieht sich daher auch auf ein Computerprogramm mit maschinenlesbaren Anweisungen, die, wenn sie auf einem Computer, und/oder auf einer Markierungsvorrichtung, ausgeführt werden, den Computer, und/oder die Markierungsvorrichtung, zu einer Markierungsvorrichtung gemäß der Erfindung aufwerten, und/oder den Computer, bzw. die Markierungsvorrichtung oder ein Lokalisierungssystem, dazu veranlassen, ein Verfahren gemäß der Erfindung auszuführen. Ebenso bezieht sich die Erfindung auch auf einen maschinenlesbaren Datenträger oder ein Downloadprodukt mit dem Computerprogramm.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel der Markierungsvorrichtung 1;
Figur 2 Ausführungsbeispiel des Verfahrens 100;
Figur 3 Beispielhafter Ausschnitt aus einem Satellitensignal 32a mit hierfür ermittelten Zeiträumen 34a, 34b.

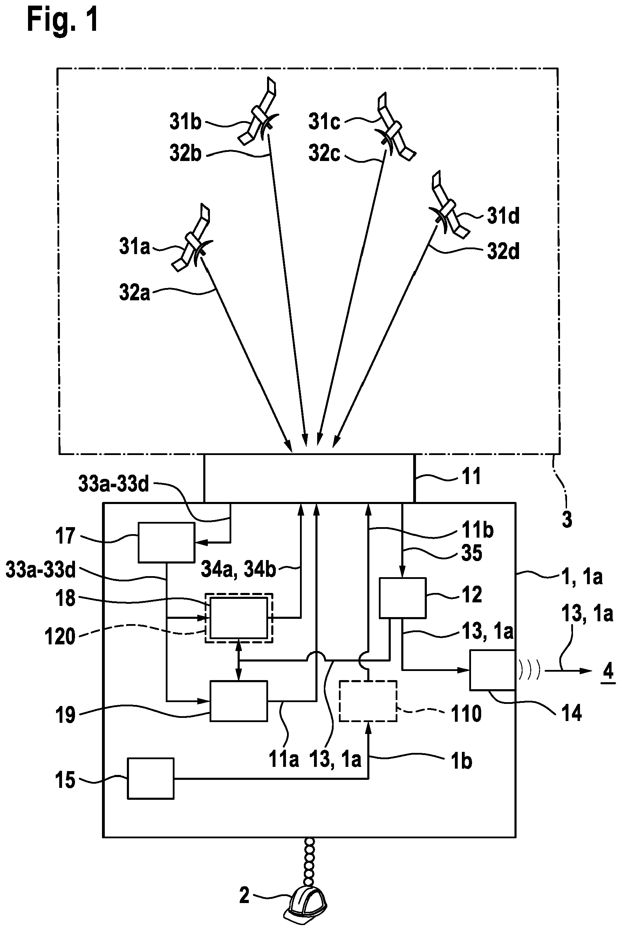

Figur 1 ist eine nicht maßstabsgerechte schematische Darstellung eines Ausführungsbeispiels der Markierungseinrichtung 1 einschließlich ihrer Anbindung an das Objekt 2, das satellitengestützte Navigationssystem 3 sowie an das Lokalisierungssystem 4.

Der Empfänger 11 der Markierungsvorrichtung 1 empfängt, sofern er aktiviert ist, Signale 32a-32d von den Satelliten 31a-31d des Navigationssystems 3. Diese Signale 32a-32d enthalten Informationen 35, die für die Laufzeitmessung der Satelliten 31a-31d relevant sind. Die Informationen 35 werden an die Auswerteeinheit 12 weitergegeben und dort zu einem Datensatz 13 weiterverarbeitet, aus dem die Position 1a der Markierungsvorrichtung 1 ermittelbar ist. Dieser Datensatz 13 wird über die Funkschnittstelle 14 an das Lokalisierungssystem 4 gesendet.

Die Signale 32a-32d enthalten außerdem die Ephemeridendaten 33a-33d der Satelliten 31a-31d, die in dem Speicher 17 hinterlegt werden. Die Ephemeridendaten 33a-33d dienen der Torschaltung 18 zur Ermittlung des Zeitraums 34a, in dem mit den Signalen 32a-32d die für die Laufzeitmessung relevante Information 35 übermittelt wird, sowie des Zeitraums 34b, in dem mit den Signalen 32a-32d neue Ephemeridendaten 33a-33d übermittelt werden. Die Ephemeridendaten 33a-33d dienen weiterhin der Verstärkungsregelung 19 zur Ermittlung einer Verstärkung 11a, mit der der Empfänger 11 angesteuert werden soll.

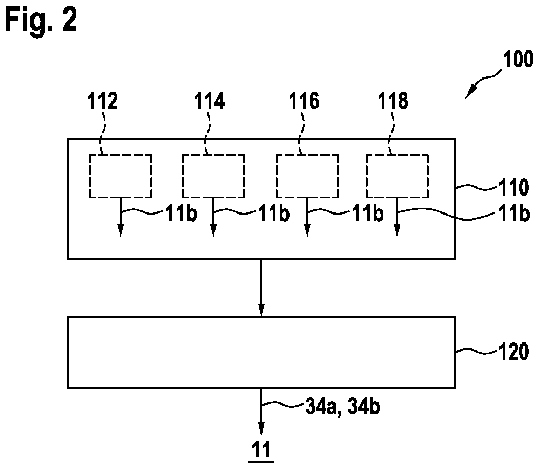

Es ist ein Beschleunigungssensor 15 vorgesehen, der die Beschleunigung 1b der Markierungsvorrichtung 1 liefert. Mit dieser Information kann gemäß Schritt 110 des in Figur 2 näher dargestellten Verfahrens 100 veranlasst werden, dass während der laufenden Handhabung des mit der Markierungsvorrichtung verbundenen Objekts 2, und/oder bei langer Nichtbenutzung dieses Objekts 2, eine Ruhepause 11b für den Empfänger 11 herrscht. Erst nach dieser Ruhepause 11b wird der Empfänger 11 von der Torschaltung 18 gesteuert.

Figur 2 zeigt schematisch ein Ausführungsbeispiel des Verfahrens 100. Es sind beispielhaft vier Möglichkeiten 112-118 eingezeichnet, wie eine Ruhepause 11b für den Empfänger 11 ermittelt werden kann.

Gemäß Block 112 wird das Optimum gesucht zwischen einer Erhöhung des Energiebedarfs durch eine verkürzte Ruhepause 11b einerseits und einer Erhöhung des Energiebedarfs durch eine Verlängerung des Empfangszeitraums 34a, 34b andererseits.

Gemäß Block 114 wird die Dauer eines voraussichtlichen Nichtgebrauchs der Markierungsvorrichtung 1, und/oder eines hiermit verbundenen Objekts 2, als Ruhepause 11b festgelegt, sofern die während dieser Ruhepause 11b entfallenden Aktivierungen des Empfängers 11 mehr Energie einsparen als der anschließende Kaltstart des Empfängers 11 ohne gültige Ephemeridendaten 33a-33d kostet.

Gemäß Block 116 wird ab einer bestimmten Dauer der Nichtbewegung der Markierungsvorrichtung 1 die Zeit bis zur nächsten Bewegung als Ruhepause 11b gewertet.

Gemäß Block 118 wird ein Zeitraum, in dem eine Bewegung der Markierungsvorrichtung andauert, als Ruhepause 11b für den Empfänger 11 gewertet.

Gemäß Schritt 110 des Verfahrens 100 wird der Empfänger 11 für die Dauer der Ruhepause 11b deaktiviert. Danach wird der Empfänger gemäß Schritt 120 für die von der Torschaltung 18 ermittelten Zeiträume 34a, 34b, in denen die Informationen 35 für die Laufzeitmessung bzw. neue Ephemeridendaten 33a-33d übermittelt werden, aktiviert.

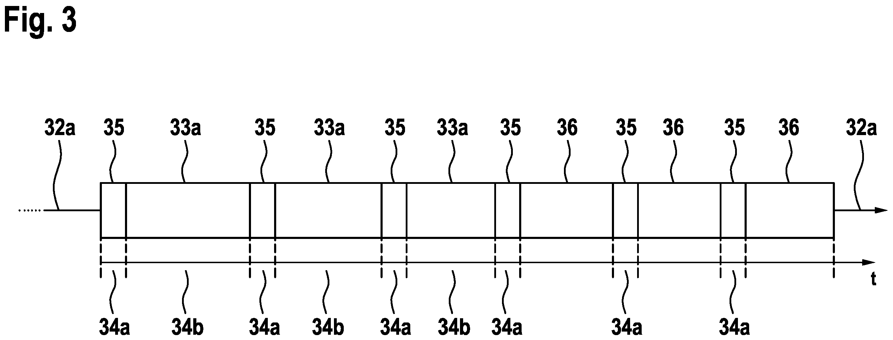

Figur 3 zeigt eine beispielhafte Zusammensetzung eines Satellitensignals 32a entlang der Achse der Zeit t. Es wechseln sich periodisch kurze Blöcke mit Informationen 35 für die Laufzeitbestimmung und längere Blöcke ab. Die ersten drei längeren Blöcke enthalten Ephemeridendaten 33a, die letzten drei längeren Blöcke enthalten Konfigurations- und Verwaltungsdaten 36, die nicht unmittelbar für die Markierungsvorrichtung 1 relevant sind.

Zeiträume, in denen mit dem Signal 32a die Informationen 35 für die Laufzeitmessung übermittelt werden, stellen Gelegenheiten für eine Laufzeitmessung dar und sind mit dem Bezugszeichen 34a gekennzeichnet. Zeiträume, in denen mit dem Signal 32a Ephemeridendaten 33a übermittelt werden, stellen Gelegenheiten für eine Aktualisierung der Ephemeridendaten 33a im Speicher 17 dar und sind mit dem Bezugszeichen 34b gekennzeichnet.

## Patentansprüche

1. Markierungsvorrichtung (1) für ein Objekt (2), umfassend einen Empfänger (11) zum Erfassen von Signalen (32a-32d) eines satellitengestützten Navigationssystems (3) und eine Auswerteeinheit (12), die dazu ausgebildet ist, die erfassten Signale (32a-32d) zu einem Datensatz (13) weiterzuverarbeiten, aus dem die Position (1a) der Markierungsvorrichtung (1) ermittelbar ist, wobei die Markierungsvorrichtung (1) weiterhin einen Speicher (17) für Ephemeridendaten (33a-33d) von Satelliten (31a-31d) des Navigationssystems (3) enthält, **dadurch gekennzeichnet, dass** eine Torschaltung (18) vorgesehen ist, die dazu ausgebildet ist, aus den im Speicher (17) hinterlegten Ephemeridendaten (33a-33d) einen Zeitraum (34a, 34b) zu ermitteln, in dem seitens des Navigationssystems (3) die Übermittlung einer für die Markierungsvorrichtung (1) relevanten Information (35, 33a-33d) in den Signalen (32a-32d) geplant ist, und den Empfänger (11) selektiv während dieses Zeitraums (34a, 34b) zu aktivieren.

2. Markierungsvorrichtung (1) nach Anspruch 1, **dadurch gekennzeichnet, dass** die Torschaltung (18) dazu ausgebildet ist, einen Zeitraum (34a) zu ermitteln, in dem die Übermittlung einer für eine Laufzeitmessung des Signals (32a-32d) mindestens eines Satelliten (31a-31d) notwendigen Information (35) geplant ist.

3. Markierungsvorrichtung (1) nach einem der Ansprüche 1 bis 2, **dadurch gekennzeichnet, dass** die Torschaltung (18) dazu ausgebildet ist, einen Zeitraum (34b) zu ermitteln, in dem die Übermittlung von Ephemeridendaten (33a-33d) geplant ist.

4. Markierungsvorrichtung (1) nach einem der Ansprüche 1 bis 3, **dadurch gekennzeichnet, dass** zusätzlich ein Verstärkungsregler (19) vorgesehen ist, der dazu ausgebildet ist, aus den im Speicher (17) hinterlegten Ephemeridendaten (33a-33d) eine für den Empfang der Signale (31a-31d) erforderliche Verstärkung (11a) des Empfängers (11) zu ermitteln und den Empfänger (11) mit dieser Verstärkung (11a) anzusteuern.

5. Markierungsvorrichtung (1) nach einem der Ansprüche 1 bis 4, **dadurch gekennzeichnet, dass** die Torschaltung (18), und/oder die Verstärkungsregelung (19), zusätzlich dazu ausgebildet ist, den von der Auswerteeinheit (12) gelieferten Datensatz (13), und/oder eine von der Markierungsvorrichtung (1) selbst ermittelte eigene Position (la), für die Ermittlung des Zeitraums (34a, 34b), bzw. der Verstärkung (11a), heranzuziehen.

6. Markierungsvorrichtung (1) nach einem der Ansprüche 1 bis 4, **dadurch gekennzeichnet, dass** zusätzlich eine Funkschnittstelle (14) zur Übermittlung des Datensatzes (13) an ein Lokalisierungssystem (4) für das Objekt (2) vorgesehen ist.

7. Markierungsvorrichtung (1) nach einem der Ansprüche 1 bis 6, **dadurch gekennzeichnet, dass** zusätzlich ein Beschleunigungssensor (15) vorgesehen ist.

8. Verfahren (100) zum Betreiben einer Markierungsvorrichtung (1) nach einem der Ansprüche 1 bis 7, **dadurch gekennzeichnet, dass** die Aktivierung des Empfängers (11) für eine vorgegebene Ruhepause (11b) unterbunden (110) und nach Ablauf dieser Ruhepause durch die Torschaltung (18) gesteuert (120) wird.

9. Verfahren (100) nach Anspruch 8, **dadurch gekennzeichnet, dass** zur Ermittlung der vorgegebenen Ruhepause (11b) die Erhöhung des mittleren Energiebedarfs der Markierungsvorrichtung (1) aufgrund der Verkürzung der Ruhepause (11b) gegenüber der Erhöhung des mittleren Energiebedarfs aufgrund der notwendigen Verlängerung des Empfangszeitraums (34a, 34b) abgewogen wird (112).

10. Verfahren (100) nach einem der Ansprüche 8 bis 9, **dadurch gekennzeichnet, dass** die Ruhepause (11b) auf die Dauer eines voraussichtlichen Nichtgebrauchs der Markierungsvorrichtung (1), und/oder eines damit verbundenen Objekts (2), festgelegt wird (114), wenn die für zwischenzeitlich entfallene Aktivierungen des Empfängers (11) eingesparte Energiemenge größer ist als die für einen Kaltstart des Empfängers (11) ohne gültige Ephemeridendaten (33a-33d) benötigte Energiemenge.

11. Verfahren (100) nach einem der Ansprüche 8 bis 10, **dadurch gekennzeichnet, dass** ein Zeitpunkt, zu dem seit der letzten festgestellten Bewegung der Markierungsvorrichtung (1) ein vorgegebener Zeitraum verstrichen ist, als Beginn der Ruhepause (11b) und ein Zeitpunkt, zu dem die nächste Bewegung der Markierungsvorrichtung (1) festgestellt wird, als Ende der Ruhepause (11b) gewertet wird (116).

12. Verfahren (100) nach einem der Ansprüche 8 bis 11, **dadurch gekennzeichnet, dass** ein Zeitraum, in dem die Markierungsvorrichtung (1) bewegt wird, als Ruhepause (11b) für den Empfänger gewertet wird (118).

13. Computerprogramm, enthaltend maschinenlesbare Anweisungen, die, wenn sie auf einem Computer, und/oder auf einer Markierungsvorrichtung (1), ausgeführt werden, den Computer, und/oder die Markierungsvorrichtung (1), zu einer Markierungsvorrichtung nach einem der Ansprüche 1 bis 7 aufwerten, und/oder den Computer, bzw. die Markierungsvorrichtung oder ein Lokalisierungssystem, dazu veranlassen, ein Verfahren (100) nach einem der Ansprüche 8 bis 12 auszuführen.
